# EUROPÄISCHE PATENTSCHRIFT

(11) **EP 2 834 555 B1**
(45) Veröffentlichungstag und Bekanntmachung des Hinweises auf die Patenterteilung: **23.01.2019**
(21) Anmeldenummer: 13706254.3
(22) Anmeldetag: 25.02.2013
(51) Int. Cl.: F21S 41/147, F21S 41/25, F21S 41/63, F21S 41/675, F21S 41/68, F21S 41/16, G02B 19/00, G02B 3/14, F21V 5/00, G02B 26/10

(54) **BELEUCHTUNGSVORRICHTUNG FÜR EIN KRAFTFAHRZEUG**
ILLUMINATING DEVICE FOR A MOTOR VEHICLE
DISPOSITIF D'ÉCLAIRAGE POUR VÉHICULE

(30) Priorität: 03.04.2012 DE 102012205438
(43) Veröffentlichungstag der Anmeldung: 11.02.2015
(73) Patentinhaber: Bayerische Motoren Werke Aktiengesellschaft, 80809 München (DE)
(72) Erfinder: ERDL, Helmut, 83126 Flintsbach (DE); HANAFI, Abdelmalek, 80686 München (DE)
(86) Internationale Anmeldenummer: PCT/EP2013/053688
(87) Internationale Veröffentlichungsnummer: WO 2013/149767

(56) Entgegenhaltungen:
- EP-A2- 2 537 708
- DE-A1-102010 028 949
- JP-A- 2009 224 039
- JP-A- 2010 036 835
- JP-A- 2011 157 022
- US-A1- 2007 177 250
- US-A1- 2011 249 460

## Beschreibung

Die Erfindung betrifft eine Beleuchtungsvorrichtung für ein Kraftfahrzeug gemäß dem Oberbegriff des Anspruchs 1.

Aus dem Stand der Technik sind scannende Beleuchtungssysteme für Kraftfahrzeuge bekannt, welche mit einem Scanner ein über zumindest eine Halbleiterdiode erzeugtes Lichtbündel geeignet ablenken, um verschiedene Lichtverteilungen darzustellen.

In der Druckschrift WO 2010/058323 A1 ist eine scannende Beleuchtungsvorrichtung für ein Kraftfahrzeug gezeigt, bei der monochromatisches Laserlicht auf einen Scanner fällt, mit dem die Lichtverteilung generiert wird. Hinter dem Scanner befindet sich ein Konvertierungselement in der Form einer Phosphorplatte, mit der aus dem Laserlicht Weißlicht generiert wird. Zur Begrenzung der Lichtverteilung im Fernfeld ist eine Blende an der Phosphorplatte positioniert. Über diese Blende kann eine Hell-Dunkel-Grenze in der Lichtverteilung generiert werden, jedoch kann diese Grenze nicht variiert werden.

Die Druckschrift JP 2010 036835 A offenbart eine Beleuchtungsvorrichtung für ein Kraftfahrzeug, die u.a. eine LED-Lichtquelle und einen Scanner umfasst. Das Lichtbündel der Lichtquelle wird vor Auftreten auf dem Scanner durch einen Schlitz in eine Schlitzplatte gelenkt.

In dem Dokument JP 2011 157022 A ist eine Beleuchtungsvorrichtung für ein Kraftfahrzeug mit einer Laserlichtquelle und einem Scanner gezeigt. Dabei wird in einem Ausführungsbeispiel das Licht der Laserlichtquelle über einen Lichtwellenleiter zum Scanner gelenkt.

Aufgabe der Erfindung ist es, eine scannende Beleuchtungsvorrichtung für ein Kraftfahrzeug zu schaffen, mit der einfach und effizient eine vorbestimmte Lichtverteilung generiert wird.

Diese Aufgabe wird durch die Beleuchtungsvorrichtung gemäß Patentanspruch 1 gelöst. Weiterbildungen der Erfindung sind in den abhängigen Ansprüchen definiert.

Die erfindungsgemäße Beleuchtungsvorrichtung umfasst eine Lichtquelle aus einer Anzahl von Halbleiterdioden sowie einen Scanner, auf den ein durch das Licht der Lichtquelle erzeugtes Lichtbündel fällt und der im Betrieb der Beleuchtungsvorrichtung die Lage des Lichtbündels verändert und hierdurch einen durch das Lichtbündel generierten Lichtspot in einem Abstand von der Beleuchtungsvorrichtung und insbesondere im Fernfeld der Beleuchtungsvorrichtung bewegt. Mit diesem bewegten Lichtspot wird eine vorbestimmte Lichtverteilung generiert. Durch entsprechende Ansteuerung des Scanners können in der Regel verschiedene Lichtverteilungen je nach Anwendungsfall erzeugt werden. Unter Fernfeld ist die Lichtverteilung in einem Abstand von der Beleuchtungsvorrichtung zu verstehen, der wesentlich größer als die Abmessungen der Beleuchtungsvorrichtung ist und insbesondere im Bereich von 25 m vor der Beleuchtungsvorrichtung liegt. Unter einem Lichtbündel ist ein im Winkel bzw. Raum begrenztes Lichtbündel aus Lichtstrahlen zu verstehen, wobei die Lichtstrahlen im Bündel im Wesentlichen parallel bzw. auch auseinander oder zusa mmenlaufen können.

In der erfindungsgemäßen Beleuchtungsvorrichtung ist zwischen Lichtquelle und Scanner eine Einrichtung zur Strahlbegrenzung vorgesehen, mit welcher der Querschnitt des Lichtbündels entlang einer vorbestimmten Grenze in der Form eines Parallelogramms begrenzt wird, wobei die Beleuchtungsvorrichtung derart ausgestaltet ist, dass mit zumindest einem Abschnitt der vorbestimmten Grenze eine oder mehrere Hell-Dunkel-Grenzen in der vorbestimmten Lichtverteilung gebildet werden. Das heißt, durch die vorbestimmte Grenze, welche in dem durch das Lichtbündel erzeugten Lichtspot abgebildet ist, wird über entsprechende Ansteuerung des Scanners zumindest eine Hell-Dunkel-Grenze in der Lichtverteilung generiert. Die vorbestimmte Grenze bewegt sich zusammen mit dem Lichtspot und ermöglicht auf einfache Weise eine flexible Ausbildung von komplexen Kontraststrukturen in der Lichtverteilung. In der erfindungsgemäßen Beleuchtungsvorrichtung wird dabei durch eine Scan-Bewegung des Scanners eine obere Kante des Parallelogramms zur Erzeugung eines horizontalen Abschnitts einer Hell-Dunkel-Grenze in der vorbestimmten Lichtverteilung verwendet, wohingegen eine schräg verlaufende Kante des Parallelogramms zur Erzeugung eines nach oben verlaufenden Abschnitts in der Hell-Dunkel-Grenze dient.

Die erfindungsgemäße Beleuchtungsvorrichtung enthält vorzugsweise eine Laserlichtquelle. Das heißt, die Halbleiterdioden umfassen eine oder mehrere und insbesondere ausschließlich Laserdioden. Die Laserdioden weisen vorzugsweise eine jeweilige Maximalleistung von mindestens 1 W und insbesondere zwischen 1,5 und 5 W auf.

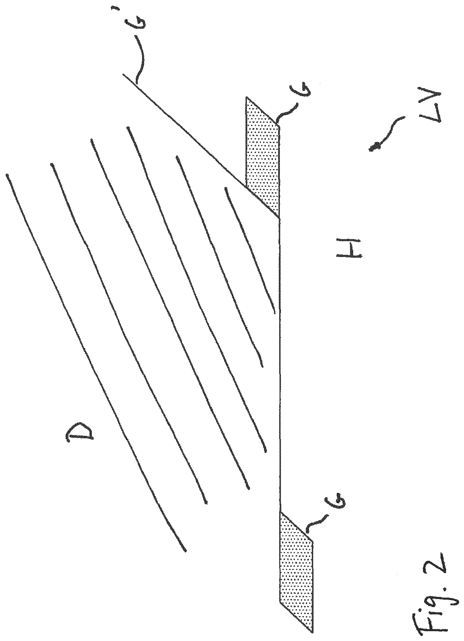

Erfindungsgemäß umfasst die vorbestimmte Grenze, gemäß der der Querschnitt des Lichtbündels begrenzt ist, eine oder mehrere gerade Linien, mit denen die Hell-Dunkel-Grenze oder die Hell-Dunkel-Grenzen in der vorbestimmten Lichtverteilung gebildet werden. In einer nicht zur Erfindung gehörenden Ausführungsform ist die vorbestimmte Grenze ein Rechteck. Über die Richtungen der Kanten des obigen Parallelogramms kann dabei durch entsprechende Bewegung des Scanners eine Hell-Dunkel-Grenze generiert werden, wie z.B. die Abblendlichtcharakteristik einer als Scheinwerfer ausgestalteten Beleuchtungsvorrichtung, wie weiter unten anhand von Fig. 2 erläutert wird.

In einer besonders bevorzugten Ausführungsform umfasst die Einrichtung zur Strahlbegrenzung eine Blende, wobei durch die Blendenöffnung der Querschnitt des Lichtbündels entlang der vorbestimmten Grenze begrenzt wird. Gegebenenfalls kann die Blendenöffnung variierbar sein, so dass die vorbestimmte Grenze verändert werden kann. Die Einrichtung zur Strahlbegrenzung kann ggf. generell derart ausgestaltet sein, dass die vorbestimmte Grenze variiert werden kann.

In einer besonders bevorzugten Ausführungsform ist die Blende innerhalb einer optischen Einrichtung angeordnet, welche das Lichtbündel auf die Blendenöffnung richtet bzw. fokussiert und das auf die Blende gerichtete Lichtbündel auf den Scanner wirft. In einer bevorzugten Variante umfasst diese optische Einrichtung zumindest eine Linse und/oder zumindest einen Reflektor vor und/oder zumindest eine Linse und/oder zumindest einen Reflektor hinter der Blende.

Alternativ oder zusätzlich zu einer Blende kann die Einrichtung zur Strahlbegrenzung auch einen Lichtleiter und insbesondere eine optische Lichtfaser umfassen, in dem das Licht der Lichtquelle geführt wird. In diesem Fall ist durch den Querschnitt des Lichtleiters die entsprechende Begrenzung des Querschnitts des Lichtbündels vorgegeben.

In einer weiteren bevorzugten Ausführungsform der Erfindung erzeugt die Lichtquelle monochromatisches Licht, wobei ein Konvertierungselement zur Wandlung des Lichts der Lichtquelle in Weißlicht vorgesehen ist. Solche Konvertierungselemente sind an sich aus dem Stand der Technik bekannt. Beispielsweise kann bei blauen/violetten Laserdioden mit einer Emissionswellenlänge von 450 nm/405 nm ein Phosphorkonvertierungselement aus Nitrid-Phosphor oder Oxidnitrid-Phosphor oder Cerium-dotiertem YAG-Phosphor zur Generierung von Weißlicht verwendet werden.

Das Konvertierungselement, welches insbesondere als eine Schicht ausgestaltet ist, kann je nach Ausgestaltung der Erfindung an unterschiedlichen Positionen in der Beleuchtungsvorrichtung angeordnet sein, z.B. an einer Position, bevor oder nachdem das Lichtbündel den Scanner passiert hat. In einer besonders bevorzugten Ausführungsform ist das Konvertierungselement zwischen Lichtquelle und Scanner und insbesondere an der Einrichtung zur Strahlbegrenzung vorgesehen. Falls die Einrichtung zur Strahlbegrenzung eine Blende umfasst, ist das Konvertierungselement vorzugsweise in der Blendenöffnung angeordnet.

In einer weiteren Variante der erfindungsgemäßen Beleuchtungsvorrichtung ist eine Austrittsoptik vorgesehen, auf welche das Lichtbündel nach Passieren des Scanners fällt und welche den Lichtspot erzeugt.

In einer zweckmäßigen Ausgestaltung der Erfindung ist die Beleuchtungsvorrichtung derart ausgestaltet, dass die Scan-Geschwindigkeit, mit der der Lichtspot bewegt wird, und/oder der Scan-Pfad, entlang dem der Lichtspot bewegt wird, und/oder die Größe des Lichtspots variierbar sind und zur Generierung der vorbestimmten Lichtverteilung gesteuert werden. Der Scan-Pfad entspricht dem Bewegungsmuster des Lichtspots, das über die Veränderung der Lage des Lichtbündels erzeugt wird. Über eine entsprechende Definition eines Scan-Pfads kann dabei der Bereich begrenzt werden, in dem eine vorbestimmte Lichtverteilung vorliegt. Ferner kann durch mehrfaches Abfahren derselben Bereiche gemäß dem definierten Scan-Pfad die Lichtstärke in diesen Bereichen entsprechend erhöht werden.

In einer bevorzugten Ausgestaltung der soeben beschriebenen Ausführungsform ist der Scanner ein Vektorscanner, mit dem die Scan-Geschwindigkeit und/oder der Scan-Pfad und insbesondere sowohl die Geschwindigkeit als auch der Pfad variiert werden kann. In einer weiteren Ausführungsform der Erfindung, in der eine Austrittsoptik vorgesehen ist, kann die Größe des Lichtspots über diese Austrittsoptik variiert werden. Dabei enthält die Austrittsoptik vorzugsweise eine Linse und/oder einen Reflektor mit variierbarer Brennweite. Solche optischen Elemente sind an sich bekannt und bestehen z.B. aus elektroaktiven Substanzen, welche ihre Eigenschaften durch Anlegen einer elektrischen Spannung derart verändern, dass die Brennweite der Linse bzw. des Reflektors variiert wird.

Je nach Anwendungsfall kann die erfindungsgemäße Beleuchtungsvorrichtung verschiedene Funktionalitäten übernehmen. In einer Ausführungsform umfasst die Beleuchtungsvorrichtung einen Scheinwerfer. Ein Scheinwerfer zeichnet sich dadurch aus, dass er aktiv die Umgebung des Fahrzeugs ausleuchtet. Gegebenenfalls kann die erfindungsgemäße Beleuchtungsvorrichtung auch eine Signalleuchte umfassen, welche sich dadurch auszeichnet, dass sie lediglich zur Signalgebung für andere Verkehrsteilnehmer dient.

In einer bevorzugten Variante ist die Beleuchtungsvorrichtung als Scheinwerfer derart ausgestaltet, dass im Betrieb als vorbestimmte Lichtverteilung eine Abblendlichtcharakteristik generiert wird. Diese zeichnet sich durch eine scharfe Hell-Dunkel-Grenze aus, die erfindungsgemäß auf einfache Weise über die Einrichtung zur Strahlbegrenzung generiert werden kann. Gegebenenfalls kann die Beleuchtungsvorrichtung auch derart ausgestaltet sein, dass sie im Betrieb als vorbestimmte Lichtverteilung eine Fernlichtcharakteristik generiert.

Neben der erfindungsgemäßen Beleuchtungsvorrichtung betrifft die Erfindung ferner ein Kraftfahrzeug, welches eine oder mehrere der erfindungsgemäßen Beleuchtungsvorrichtungen umfasst.

Ausführungsbeispiele der Erfindung werden nachfolgend anhand der beigefügten Figuren detailliert beschrieben.

Es zeigen:
- Fig. 1: eine schematische Darstellung einer Ausführungsform einer erfindungsgemäßen Beleuchtungsvorrichtung; und
- Fig. 2: ein Beispiel einer Lichtverteilung, welche mit der erfindungsgemäßen Beleuchtungsvorrichtung generierbar ist.

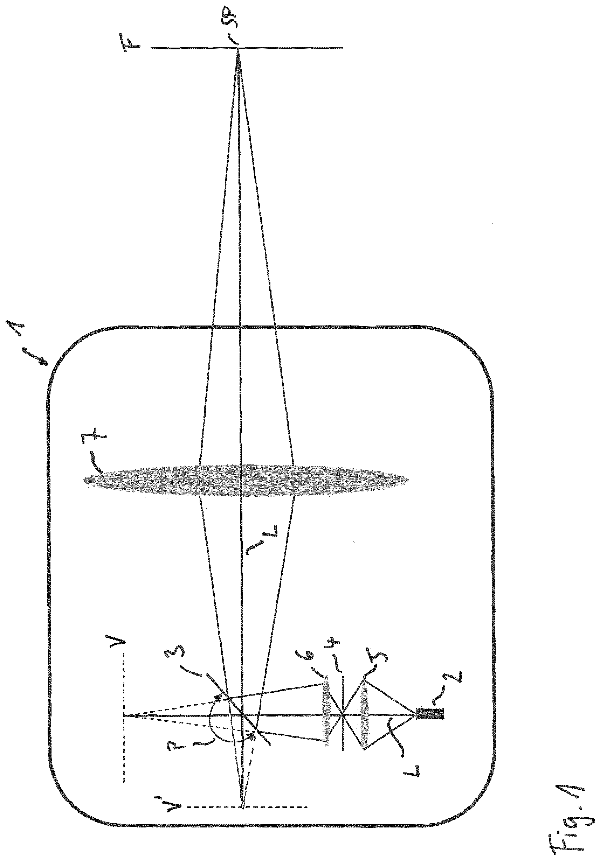

Fig. 1 zeigt in Seitenansicht eine Ausführungsform einer erfindungsgemäßen Beleuchtungsvorrichtung 1, bei der es sich um einen in einem Kraftfahrzeug (nicht gezeigt) verbauten Scheinwerfer handelt. Die Beleuchtungsvorrichtung umfasst eine Lichtquelle 2 mit einer Laserdiode, dessen abgestrahltes Licht in der Form eines Lichtbündels durch die Beleuchtungseinrichtung geleitet wird und schließlich als Lichtspot SP im Fernfeld F im Abstand von etwa 25 m wiedergegeben wird. Der Strahlengang des Lichtbündels wird auf dessen Weg verändert, wie über entsprechende Linien wiedergegeben ist. Der mittlere Strahl des Lichtbündels ist dabei durch die Linie L angedeutet. Das von der Lichtquelle 2 erzeugte Lichtbündel fällt zunächst auf eine Linse 5, mit der das Lichtbündel auf die Öffnung einer Blende 4 fokussiert wird. Die Blende 4 stellt dabei eine Ausführungsform einer Einrichtung zur Strahlbegrenzung gemäß Anspruch 1 dar. Über die Blendenöffnung wird eine vorbestimmte Form des Querschnitts des Lichtbündels eingestellt. In der hier beschriebenen Ausführungsform ist die Öffnung als Parallelogramm ausgestaltet, welches in der abgebildeten Lichtverteilung gemäß Fig. 2 mit dem Bezugszeichen G bezeichnet ist.

Innerhalb der Blendenöffnung 4 ist ferner eine Konvertierungsschicht vorgesehen, mit der das monochromatische Laserlicht der Lichtquelle 2 in Weißlicht gewandelt wird. Mit der Blende wird somit ein durch die Blendenöffnung begrenztes Weißlichtbündel erzeugt, das mit der Linse 6 auf einen Scanner 3 gerichtet wird, der lediglich schematisch angedeutet ist und ein Reflektorelement umfasst, welches entsprechend dem Pfeil P in der Blattebene verschwenkt werden kann. Hierdurch kann der Lichtspot SP in vertikaler Richtung bewegt werden. Der Scanner kann ferner auch senkrecht zur Blattebene verschwenkt werden, wodurch der Lichtspot SP in der Horizontalen bewegt wird. Das über die Linse 6 erzeugte virtuelle Blendenbild liegt in der gestrichelt angedeuteten Ebene V.

Das auf den Scanner fallende Lichtbündel wird in Richtung hin zu einer Austrittsoptik in der Form einer Linse 7 gerichtet. Aufgrund der Lichtreflexion am Scanner bildet diese Linse das in der gestrichelt angedeuteten Ebene V' liegende gespiegelte, virtuelle Blendenbild ab, wodurch im Fernfeld F der Lichtspot SP erhalten wird. Durch eine entsprechende Verschwenkung des Scanners kann der Lichtspot in geeigneter Weise im Fernfeld bewegt werden und hierdurch eine gewünschte Lichtverteilung erzeugt werden. Vorzugsweise ist der Scanner dabei ein sog. Vektorscanner, mit dem die Scan-Geschwindigkeit und der Scan-Pfad mittels einer Steuereinrichtung gesteuert wird, um hierdurch das entsprechende Lichtmuster zu generieren. Ferner kann die Austrittsoptik 7 als Linse mit variabler Brechkraft ausgestaltet sein, so dass über eine Verstellung der Brechkraft auch die Größe des Lichtspots im Fernfeld beeinflusst werden kann.

Wie oben erwähnt, wird über die Blende 4 der Querschnitt des Lichtbündels entsprechend begrenzt, wobei sich die Begrenzung des Querschnitts auch im Lichtspot SP in der abgebildeten Lichtverteilung im Fernfeld findet. Dies ist anhand von Fig. 2 verdeutlicht, welche beispielhaft eine mit der Beleuchtungsvorrichtung der Fig. 1 generierte Lichtverteilung LV im Fernfeld zeigt. Die Lichtverteilung entspricht einer Abblendlichtcharakteristik des Fahrzeugs, bei der eine scharfe Hell-Dunkel-Grenze G' vorhanden ist. In Fig. 2 liegt dabei die Fahrbahnmitte im linken Bereich der Lichtverteilung und der Fahrbahnrand im rechten Bereich. Gemäß der Hell-Dunkel-Grenze G' liegt der helle Bereich H der Lichtverteilung unterhalb der Grenze und der dunkle Bereich D (schraffiert angedeutet) oberhalb der Grenze. Die Hell-Dunkel-Grenze verläuft von der Fahrbahnmitte hin zum Fahrbahnrand zunächst horizontal auf einer niedrigen Höhe, um hierdurch eine Blendung des Gegenverkehrs zu vermeiden. Schließlich knickt die Grenze in der Nähe des Fahrbahnrands nach oben ab, wodurch eine gute Ausleuchtung des Fahrbahnrands erreicht wird.

Aus Fig. 2 ist ferner das bereits oben erwähnte Parallelogramm G ersichtlich, welches die über die Optik der Beleuchtungsvorrichtung abgebildete Blendenöffnung wiedergibt und den Lichtspot SP darstellt. Beispielhaft sind zwei verschiedene Positionen des Parallelogramms wiedergegeben, welche durch die Scan-Bewegung des Scanners bei der Generierung der Lichtverteilung eingenommen werden. Wie man erkennt, wurde die Form des Parallelogramms G entsprechend dem Verlauf der Hell-Dunkel-Grenze G' gewählt. Das heißt, der kleinere Winkel zwischen benachbarten Kanten des Parallelogramms entspricht dem Winkel, um den die Hell-Dunkel-Grenze am Fahrbahnrand abknickt. Durch eine geeignete Scan-Bewegung wird die obere Kante des Parallelogramms G zur Erzeugung des horizontalen Abschnitts der Hell-Dunkel-Grenze G' verwendet, wohingegen die schräg verlaufende Kante zur Erzeugung des nach oben verlaufenden Abschnitts der Hell-Dunkel-Grenze G' dient. Die Erstreckungsrichtungen des Parallelogramms wurden somit derart gewählt, dass sie die Linien der zu erzeugenden Lichtverteilung beschreiben, entlang derer die höchsten Gradienten verlaufen sollen.

Im Vorangegangenen wurde die Erfindung basierend auf einem Ausführungsbeispiel mit Blende 4 und einer Zwischenoptik aus Linsen 5 und 6 beschrieben, wobei durch die Blendenöffnung die Begrenzung des Lichtbündels erreicht wird. Gegebenenfalls können im Rahmen der Erfindung auch andere Bauteile verwendet werden, um eine Begrenzung des Lichtbündels vor dem Auftreffen auf den Scanner zu erreichen. Insbesondere kann anstatt einer Blende auch eine geeignet geformte optische Lichtfaser eingesetzt werden, welche in der Ausführungsform der Fig. 1 den Querschnitt eines Parallelogramms hat. Das Licht der Lichtquelle 2 wird somit durch den Querschnitt der Lichtfaser beschränkt. An der Austrittsöffnung der Lichtfaser kann wiederum ein entsprechendes Konvertierungselement zur Erzeugung von Weißlicht angeordnet sein. In einer weiteren bevorzugten Ausführungsform kann die Blende 4 auch variabel ausgestaltet sein, so dass je nach zu erzeugender Lichtverteilung auch die Form der Blendenöffnung geeignet angepasst werden kann. Ferner ist die in Fig. 1 dargestellte Zwischenoptik lediglich beispielhaft. Diese Optik kann auch anders ausgestaltet sein bzw. weggelassen werden. Darüber hinaus besteht auch die Möglichkeit, das Konvertierungselement in der Blendenöffnung an einer anderen Position im Strahlengang anzuordnen. Ebenso kann die Austrittsoptik 7 anders ausgestaltet sein und z.B. aus mehreren Linsen und/oder Reflektoren gebildet sein.

Die im Vorangegangenen beschriebene Ausführungsform der Erfindung weist eine Reihe von Vorteilen auf. Im Gegensatz zu der Anbringung einer Blende im Strahlengang des Lichtbündels hinter dem Scanner kann mit der Begrenzung des Lichtbündels vor dem Auftreffen auf den Scanner der Lichtspot der Lichtverteilung selbst geformt werden. Die entsprechende Begrenzung wird dabei durch den Scanner mitbewegt, so dass hierdurch komplexe Kontraststrukturen in der Form von scharfen Hell-Dunkel-Grenzen generiert werden können.

### Bezugszeichenliste

- 1: Beleuchtungsvorrichtung
- 2: Lichtquelle
- 3: Scanner
- 4: Blende
- 5, 6, 7: Linsen
- L: Lichtbündel
- P: Pfeil
- V, V': virtuelle Blendenbilder
- F: Fernfeld
- SP: Lichtspot
- LV: Lichtverteilung
- G: vorbestimmte Grenze
- G': Hell-Dunkel-Grenze
- H: heller Bereich
- D: dunkler Bereich

## Patentansprüche

1. Beleuchtungsvorrichtung für ein Kraftfahrzeug, umfassend eine Lichtquelle (2) aus einer Anzahl von Halbleiterdioden sowie einen Scanner (3), auf den ein durch das Licht der Lichtquelle (2) erzeugtes Lichtbündel (L) fällt und der im Betrieb der Beleuchtungsvorrichtung (1) die Lage des Lichtbündels (L) verändert und hierdurch einen durch das Lichtbündel (L) generierten Lichtspot (SP) in einem Abstand von der Beleuchtungsvorrichtung (1) bewegt, wobei mit dem bewegten Lichtspot (SP) eine vorbestimmte Lichtverteilung (LV) generiert wird, wobei zwischen Lichtquelle (2) und Scanner (3) eine Einrichtung (4) zur Strahlbegrenzung vorgesehen ist, mit welcher der Querschnitt des Lichtbündels (L) entlang einer vorbestimmten Grenze (G) in der Form eines Parallelogramms begrenzt wird, wobei die Beleuchtungsvorrichtung (1) derart ausgestaltet ist, dass mit zumindest einem Abschnitt der vorbestimmten Grenze (G) eine oder mehrere Hell-Dunkel-Grenzen (G') in der vorbestimmten Lichtverteilung (LV) gebildet werden,
**dadurch gekennzeichnet, dass**
das Parallelogramm eine horizontale Kante und eine schräg verlaufende Kante aufweist, und dass durch eine Scan-Bewegung des Scanners (3) eine obere Kante des Parallelogramms zur Erzeugung eines horizontalen Abschnitts einer Hell-Dunkel-Grenze (G') in der vorbestimmten Lichtverteilung (LV) verwendet wird, wohingegen eine schräg verlaufende Kante des Parallelogramms zur Erzeugung eines nach oben verlaufenden Abschnitts in der Hell-Dunkel-Grenze (G') dient.

2. Beleuchtungsvorrichtung nach Anspruch 1, **dadurch gekennzeichnet, dass** die Anzahl von Halbleiterdioden der Lichtquelle (2) eine oder mehrere Laserdioden umfasst.

3. Beleuchtungsvorrichtung nach einem der vorhergehenden Ansprüche, **dadurch gekennzeichnet, dass** die Einrichtung (4) zur Strahlbegrenzung eine Blende (4) umfasst, wobei durch die Blendenöffnung der Querschnitt des Lichtbündels (L) entlang der vorbestimmten Grenze (G) begrenzt wird, wobei die Blendeöffnung vorzugsweise variiert werden kann.

4. Beleuchtungsvorrichtung nach Anspruch 3, **dadurch gekennzeichnet, dass** die Blende (4) innerhalb einer optischen Einrichtung (5, 6) angeordnet ist, welche das Lichtbündel (L) auf die Blendenöffnung richtet und das auf die Blende (4) gerichtete Lichtbündel (L) auf den Scanner (3) wirft.

5. Beleuchtungsvorrichtung nach Anspruch 4, **dadurch gekennzeichnet, dass** die optische Einrichtung (5, 6) zumindest eine Linse (5) und/oder zumindest einen Reflektor vor und/oder zumindest eine Linse (6) und/oder zumindest einen Reflektor hinter der Blende (4) umfasst.

6. Beleuchtungsvorrichtung nach einem der vorhergehenden Ansprüche, **dadurch gekennzeichnet, dass** die Einrichtung (4) zur Strahlbegrenzung einen Lichtleiter und insbesondere eine optische Lichtfaser umfasst, in dem das Licht der Lichtquelle (2) geführt wird.

7. Beleuchtungsvorrichtung nach einem der vorhergehenden Ansprüche, **dadurch gekennzeichnet, dass** die Lichtquelle (2) monochromatisches Licht erzeugt und ein Konvertierungselement zur Wandlung des Lichts der Lichtquelle in Weißlicht vorgesehen ist.

8. Beleuchtungsvorrichtung nach Anspruch 7, **dadurch gekennzeichnet, dass** das Konvertierungselement zwischen Lichtquelle (2) und Scanner (3) angeordnet ist und insbesondere an der Einrichtung (4) zur Strahlbegrenzung vorgesehen ist.

9. Beleuchtungsvorrichtung nach Anspruch 8 in Kombination mit Anspruch 3, **dadurch gekennzeichnet, dass** das Konvertierungselement in der Blendenöffnung angeordnet ist.

10. Beleuchtungsvorrichtung nach einem der vorhergehenden Ansprüche, **dadurch gekennzeichnet, dass** eine Aus trittsoptik (7) vorgesehen ist, auf weiche das Lichtbündel (L) nach Passieren des Scanners (3) fällt und welche den Lichtspot (SP) erzeugt.

11. Beleuchtungsvorrichtung nach einem der vorhergehenden Ansprüche, **dadurch gekennzeichnet, dass** die Beleucht ungsvorrichtung (1) derart ausgestaltet ist, dass die Scan-Geschwindigkeit, mit der der Lichtspot (SP) bewegt wird, und/oder der Scan-Pfad, entlang dem der Lichtspot (SP) bewegt wird, und/oder die Größe des Lichtspots (SP) variierbar sind und zur Generierung der vorbestimmten Lichtverteilung (LV) gesteuert werden.

12. Beleuchtungsvorrichtung nach Anspruch 11, **dadurch gekennzeichnet, dass** der Scanner (3) ein Vektorscanner ist, mit dem die Scan-Geschwindigkeit und/oder der Scan-Pfad variiert werden kann.

13. Beleuchtungsvorrichtung nach Anspruch 11 oder 12 und Anspruch 10, **dadurch gekennzeichnet, dass** mit der Austrittsoptik (7) die Größe des Lichtspots variierbar ist.

14. Beleuchtungsvorrichtung nach Anspruch 13, **dadurch gekennzeichnet, dass** die Austrittsoptik (4) eine Linse und/oder einen Reflektor mit variierbarer Brennweite umfasst.

15. Beleuchtungsvorrichtung nach einem der vorhergehenden Ansprüche, **dadurch gekennzeichnet, dass** die Beleuchtungsvorrichtung (1) eine Signalleuchte und/oder einen Scheinwerfer umfasst.

16. Beleuchtungsvorrichtung nach einem der vorhergehenden Ansprüche, **dadurch gekennzeichnet, dass** die Beleucht ungsvorrichtung (1) einen Scheinwerfer umfasst und derart ausgestaltet ist, dass im Betrieb als vorbestimmte Lichtverteilung (LV) eine Abblendlichtcharakteristik und/oder eine Fernlichtcharakteristik generiert wird.

17. Kraftfahrzeug, umfassend eine oder mehrere Beleuchtungsvorrichtungen (1) nach einem der vorhergehenden Ansprüche.

## Claims

1. An illumination device for a motor vehicle, comprising a light source (2) formed of a number of semiconductor diodes and also a scanner (3), on which a light beam (L) produced by the light of the light source (2) falls and which during operation of the illumination device (1) changes the position of the light beam (L) and thereby moves a light spot (SP) generated by the light beam (L) at a distance from the illumination device (1), wherein a predetermined light distribution (LV) is generated with the moved light spot (SP), wherein a means (4) for beam limitation is provided between the light source (2) and the scanner (3), with which means the cross-section of the light beam (L) is limited along a predetermined boundary (G) in the form of a parallelogram, wherein the illumination device (1) is configured such that one or more light/dark boundaries (G') are formed in the predetermined light distribution (LV) with at least one portion of the predetermined boundary (G),
**characterised in that**
the parallelogram has a horizontal edge and an obliquely running edge, and **in that** by a scanning movement of the scanner (3) an upper edge of the parallelogram is used to produce a horizontal portion of a light/dark boundary (G') in the predetermined light distribution (LV), whereas an obliquely running edge of the parallelogram serves to produce an upward-running portion in the light/dark boundary (G').

2. An illumination device according to Claim 1, **characterised in that** the number of semiconductor diodes of the light source (2) comprises one or more laser diode(s).

3. An illumination device according to one of the preceding claims, **characterised in that** the means (4) for beam limitation comprises a stop (4), the cross-section of the light beam (L) along the predetermined boundary (G) being limited by the stop aperture, it preferably being possible to vary the stop aperture.

4. An illumination device according to Claim 3, **characterised in that** the stop (4) is arranged within an optical means (5, 6) which directs the light beam (L) onto the stop aperture and casts the light beam (L) directed at the stop (4) onto the scanner (3).

5. An illumination device according to Claim 4, **characterised in that** the optical means (5, 6) comprises at least one lens (5) and/or at least one reflector in front of, and/or at least one lens (6) and/or at least one reflector behind, the stop (4).

6. An illumination device according to one of the preceding claims, **characterised in that** the means (4) for beam limitation comprises an optical waveguide and especially an optical light fibre, in which the light from the light source (2) is conducted.

7. An illumination device according to one of the preceding claims, **characterised in that** the light source (2) produces monochromatic light and a converting element for converting the light from the light source into white light is provided.

8. An illumination device according to Claim 7, **characterised in that** the converting element is arranged between the light source (2) and scanner (3) and is provided especially on the means (4) for beam limitation.

9. An illumination device according to Claim 8 in combination with Claim 3, **characterised in that** the converting element is arranged in the stop aperture.

10. An illumination device according to one of the preceding claims, **characterised in that** an exit optical means (7) is provided onto which the light beam (L) falls after passing through the scanner (3) and which produces the light spot (SP).

11. An illumination device according to one of the preceding claims, **characterised in that** the illumination device (1) is configured such that the scanning rate at which the light spot (SP) is moved, and/or the scanning path along which the light spot (SP) is moved, and/or the size of the light spot (SP) are variable and are controlled to generate the predetermined light distribution (LV).

12. An illumination device according to Claim 11, **characterised in that** the scanner (3) is a vector scanner with which the scanning rate and/or the scanning path can be varied.

13. An illumination device according to Claim 11 or Claim 12 and Claim 10, **characterised in that** the size of the light spot can be varied with the exit optical means (7).

14. An illumination device according to Claim 13, **characterised in that** the exit optical means (4) comprises a lens and/or a reflector with a variable focal distance.

15. An illumination device according to one of the preceding claims, **characterised in that** the illumination device (1) comprises an indicator light and/or a headlight.

16. An illumination device according to one of the preceding claims, **characterised in that** the illumination device (1) comprises a headlight and is configured such that in operation a dipped headlight characteristic and/or a main beam characteristic is generated as predetermined light distribution (LV).

17. A motor vehicle, comprising one or more illumination devices (1) according to one of the preceding claims.

## Revendications

1. Dispositif d'éclairage destiné à un véhicule comprenant une source de lumière (2) constituée par une série de diodes semi-conductrices ainsi qu'un scanner (3) sur lequel tombe le faisceau lumineux (L) produit par la lumière de la source de lumière (2) et qui modifie la position du faisceau lumineux (L) lors du fonctionnement du dispositif d'éclairage (1) et déplace ainsi le spot lumineux (SP) généré par le faisceau de lumière (L) à distance du dispositif d'éclairage (1), le spot lumineux (SP) déplacé, permettant de générer une distribution (LV) prédéfinie de la lumière, entre la source de lumière (2) et le scanner (3) étant prévu un dispositif (4) de limitation du rayonnement permettant de limiter la section du faisceau lumineux (L) le long d'une limite (G) prédéfinie ayant la forme d'un parallélogramme, le dispositif d'éclairage (1) étant réalisé de façon à former avec au moins un segment de la limite (G) prédéfinie au moins une limite clair-obscur (G') dans la distribution de lumière (LV) prédéfinie,
**caractérisé en ce que**
le parallélogramme à un bord horizontal et un bord s'étendant obliquement, et
un mouvement de balayage du scanner (3) est utilisé pour obtenir un segment horizontal de la limite clair-obscur (G') dans la distribution de lumière (LV) prédéfinie, alors que le bord s'étendant obliquement du parallélogramme sert à obtenir dans la limite clair-obscur (G') un segment s'étendant vers le haut.

2. Dispositif d'éclairage conforme à la revendication 1,
**caractérisé en ce que**
l'ensemble de diodes semi-conductrices de la source de lumière (2) comprend au moins une diode laser.

3. Dispositif d'éclairage conforme à l'une des revendications précédentes,
**caractérisé en ce que**
le dispositif (4) de limitation du rayonnement comprend un diaphragme (4), l'ouverture du diaphragme permettant de limiter la section du faisceau lumineux (L) le long de la limite (G) prédéfinie, l'ouverture du diaphragme pouvant de préférence varier.

4. Dispositif d'éclairage conforme à la revendication 3,
**caractérisé en ce que**
le diaphragme (4) est monté dans un dispositif optique (5, 6) qui dirige le faisceau lumineux (L) sur l'ouverture du diaphragme, et le faisceau lumineux (L) dirigé sur le diaphragme (4) tombe sur le scanner (3).

5. Dispositif d'éclairage conforme à la revendication 4,
**caractérisé en ce qu'**
il comporte au moins une lentille (5) et/ou au moins un réflecteur situé à l'avant du diaphragme (4) et/ou au moins une lentille (6) et/ou au moins un réflecteur situé à l'arrière du diaphragme (4).

6. Dispositif d'éclairage conforme à l'une des revendications précédentes,
**caractérisé en ce que**
le dispositif (4) de limitation du rayonnement comporte un guide d'ondes et en particulier une fibre optique dans lequel(laquelle) est transférée la lumière de la source de lumière (2).

7. Dispositif d'éclairage conforme à l'une des revendications précédentes,
**caractérisé en ce que**
la source de lumière (2) produit une lumière monochromatique et il est prévu un élément de conversion permettant de transformer la lumière de la source de lumière en une lumière blanche.

8. Dispositif d'éclairage conforme à la revendication 7,
**caractérisé en ce que**
l'élément de conversion et monté entre la source de lumière (2) et le scanner (3) et est en particulier situé sur le dispositif (4) de limitation du rayonnement.

9. Dispositif d'éclairage conforme à la revendication 8, en combinaison avec la revendication 3,
**caractérisé en ce que**
l'élément de conversion est situé dans l'ouverture du diaphragme.

10. Dispositif d'éclairage conforme à l'une des revendications précédentes,
**caractérisé en ce qu'**
il est prévu une optique de sortie (7) sur laquelle tombe le faisceau lumineux (L) après avoir traversé le scanner (3) et qui produit le spot lumineux (SP).

11. Dispositif d'éclairage conforme à l'une des revendications précédentes,
**caractérisé en ce qu'**
il est réalisé de sorte que la vitesse de balayage permettant de déplacer le spot lumineux (SP) et/ou le chemin de balayage le long duquel le spot lumineux (SP) est déplacé et/ou la dimension du spot lumineux (SP) soi(en)t variable(s) et/ou commandée(s) pour générer la répartition (LV) de la lumière prédéfinie.

12. Dispositif d'éclairage conforme à la revendication 11,
**caractérisé en ce que**
le scanner (3) est un scanner vectoriel permettant de faire varier la vitesse de balayage et/ou le chemin de balayage.

13. Dispositif d'éclairage conforme à la revendication 11 ou 12 et à la revendication 10,
**caractérisé en ce que**
l'optique de sortie (7) permet de modifier la dimension du spot lumineux.

14. Dispositif d'éclairage conforme à la revendication 13,
**caractérisé en ce que**
l'optique de sortie (4) comporte une lentille et/ou un réflecteur ayant une distance vocale variable.

15. Dispositif d'éclairage conforme à l'une des revendications précédentes,
**caractérisé en ce qu'**
il comprend un éclairage de signalisation et/ou un projecteur.

16. Dispositif d'éclairage conforme à l'une des revendications précédentes,
**caractérisé en ce qu'**
il comporte un projecteur et est réalisé de façon à générer lors de son fonctionnement, en tant que répartition (LV) prédéfinie de la lumière une caractéristique de feux de croissement et/ou une caractéristique feux de route.

17. Véhicule comprenant au moins un dispositif d'éclairage (1) conforme à l'une des revendications précédentes.
